# EUROPEAN PATENT SPECIFICATION

(11) **EP 3 125 381 B1**
(45) Date of publication and mention of the grant of the patent: **15.05.2019**
(21) Application number: 16181296.1
(22) Date of filing: 26.07.2016
(51) Int. Cl.: H02G 1/02

(54) **TRANSMISSION LINE REPLACEMENT SYSTEM & METHOD**
ÜBERTRAGUNGSLEITUNGSERSATZSYSTEM UND VERFAHREN
SYSTÈME DE REMPLACEMENT DE LIGNE DE TRANSMISSION ET PROCÉDÉ CORRESPONDANT

(30) Priority: 28.07.2015 GB 201513255
(43) Date of publication of application: 01.02.2017
(73) Proprietor: Amec Foster Wheeler Group Limited, Knutsford, Cheshire WA16 8QZ (GB)
(72) Inventor: Sherwood, Mark, Knutsford, Cheshire WA16 8QZ (GB)
(74) Representative: Somervell, Thomas Richard

(56) References cited:
- GB-A- 2 430 016
- JP-A- 2007 037 314
- KR-B1- 100 988 580
- RU-C1- 2 461 939

## Description

### Field of the Invention

The present invention relates to the replacement of overhead power transmission lines. More specifically, the present invention relates to a device and method for improving the safety of a transmission line replacement operation.

### Background

Overhead transmission and distribution lines comprise conductors extending between support structures such as pylons, masts, or towers. From time to time it may be necessary to replace or refurbish conductors for maintenance purposes, in a process referred to as "restringing".

Restringing entails the removal of an old conductor and the installation of a new conductor. To replace an old conductor section between two pylons (a proximal pylon and a distal pylon), a convenient method of restringing entails, in principle, connecting at the proximal pylon side an end of the replacing (new) conductor to an end of the (old) conductor to be replaced. The old conductor is then pulled towards the distal pylon away from the proximal pylon, and the new conductor is pulled by the connection with it through to the distal pylon. This removes the old conductor as the new conductor is installed between the two pylons.

Even though generally a rare occurrence, conductors may break or the connection between the old and new conductors may fail. This is referred to as a "broken wire situation". This causes the conductor ends at either end of the break to drop towards the ground and/or may cause a length of conductor to be pulled down. When restringing conductors above infrastructure, such as motorways, safety measures are required to mitigate damage from falling wires in a broken wire situation.

To prevent damage from falling wires it is conventional to erect scaffolding and netting and specialised constructions on ground up to a height that varies and may be about a metre below the conductor, prior to a restringing operation, to provide a safety cage to catch conductor ends in a broken wire situation. Erecting such scaffolding is costly and time-consuming.

GB 2343061 A discloses a protective device for use in the replacement of a length of overhead power transmission conductor between two pylons. The device comprises a plurality of serially linked sections that can be pulled over and along an old conductor and tensioned between two pylons by anchoring them. Arranged in this manner, the plurality of sections provides a tubular passage through which the old conductor and new conductor are pulled for restringing. In a broken wire situation, the wire ends fall into the sections and are prevented from falling further onto underlying infrastructure.

JP2007037314A discloses an electric wire relaying arrangement using a protective net. In JP2007037314A, a plurality of lateral ropes is stretched between support ropes which are supported by a plurality of inverted hanging metal wheels along a single old line. The JP2007037314A arrangement allows a single old line to be replaced by a single new line.

GB2430016A discloses a connector for use when replacing conductors of an overhead power line, comprising a four-to-three connector for use when lines with three conductors per phase replace old lines having four conductors.

KR100988580 describes a method for installing an air guard net for a transmission line. In KR100988580, a basis wire is connected between two pylons. A pair of upper wires is connected to the basis wire. A guard net is connected between the pair of upper wires.

RU2461939C1 discloses a swivel connection for connecting a single overhead transmission line to be replaced to a single new overhead transmission line.

WO2012/035383 discloses a headboard used to pull a plurality of conductors using a single drawing rope.

CN1004659705 discloses a balancing pulley used in the replacing of a single overhead transmission line.

GB2341011A depicts a swivel joint to connect a single old cable to a single new cable.

The present invention seeks to increase the repertoire of support systems for use in transmission line replacement.

### Summary of the Invention

In accordance with a first aspect of the invention, there is described a cable catcher as defined in claim 1. The cable catcher is for use as a broken-wire support in the replacement of two or more old transmission lines extending between two pylons and to be simultaneously replaced by two or more new transmission lines.

The cable catcher comprises a carrier enabling the cable catcher to be pulled over the old transmission lines and mounted between the two pylons, and is configured to rest on the transmission lines and to support the cable catcher below the transmission lines.

For ease of reference, the transmission lines are understood herein as extending longitudinally. Individual transmission lines of a plurality of transmission lines are laterally spaced apart, "laterally" meaning perpendicularly to the longitudinal extension of the transmission lines. It will be appreciated that these terms are not meant to imply geometric precision, e.g., the transmission lines may sag as they are suspended between pylons.

The cable catcher may comprise a structure providing a longitudinal passage for the old transmission lines and the new transmission lines. When a broken wire event happens inside the passage, the ends of the broken wire are, consequently, caught by the structure and held at least partially inside the passage. Thereby, the ends are prevented from falling down onto underlying infrastructure. The cable catcher is supported on the transmission lines by the carrier and anchored to the pylon. The cable catcher does not need to be tensioned to a pylon or to the ground. This facilitates the installation of the cable catcher.

By providing a carrier that rests on the transmission lines, it is not necessary to tension the cable catcher between the pylons in order to support the cable catcher. Instead, the cable catcher is supported by the transmission lines. Alternatively, ropes may be suspended between the pylons alongside the transmission lines, such that the cable catcher is supported, at least in part, by the ropes. In such cases, the cable catcher would still surround and be suspended below the transmission lines, and still include features, such as rollers, that allow it to rest on the transmission lines, when required from time to time, and to ensure that the transmission lines remain within the longitudinal passage of the cable catcher.

The present Applicant has appreciated that, because broken wire situations are rare in practice, and because it can be assumed that multiple transmission lines are installed between pylons, a safe cable-catching mechanism can be provided if a cable catcher is supported by two or more transmission lines.

Conveniently, the carrier comprises a structure permitting it to extend over laterally spaced apart transmission lines.

In some embodiments, the carrier comprises one or more rollers.

A roller facilitates the installation of the cable catcher. For instance, the cable catcher may be pulled over existing transmission lines using a remote-controlled tug, a spacer chair, or a primary rope. A spacer chair is a manually driven or motorised chair that is placed on the conductors and operated by a linesman inside the chair to remove or replace spacers that keep twin/triple/quad conductors in the correct configuration throughout the length of the span.

The cable catcher may depend from the ends of the axles of each roller. As such, the roller may be configured to lie across laterally spaced apart transmission lines. A plurality of rollers may be longitudinally spaced apart along the transmission lines. The cable catcher may be mounted to the axles of two longitudinally spaced-apart rollers to provide a longitudinal passage between the two longitudinally spaced-apart rollers.

In some embodiments, the carrier comprises a cable-guiding means for keeping two or more old transmission lines laterally apart.

The cable-guiding means provide a means to keep at least two transmission lines laterally apart, so that the carrier is supported from two sides, whereby a tilting or sliding off of the carrier from the transmission lines is inhibited.

In some embodiments, the roller has a profile to define one or more portions of a reduced diameter, the reduced diameter portions providing circumferential tracks constituting the cable-guiding means.

The portions of reduced diameter act as tracks for the transmission lines. As the carrier sits on the transmission lines, individual transmission lines slide towards a portion of reduced diameter. As such, the position of that a transmission line will assume laterally relative to the carrier can be steered by the profile.

For instance, the reduced profile portions may be set at a pre-determined spacing, which will result in the transmission lines to stay apart according to the spacing. E.g., for a three transmission lines, the carrier may have three waists, a central waist and two lateral waists, each of the three waists constituting a portion of reduced diameter suitable to laterally guide the cable. This reduces the risk of transmission lines becoming entangled. The spaced relationship improves the support of the carrier on the transmission lines by distributing the load laterally.

The carrier may have two or more flanges and a portion of reduced diameter may be the portion between two or more flanges.

In the alternative arrangement where the cable catcher is supported or partially supported on ropes, the rollers may be of a simpler construction and may not be configured to rotate on axles as such, but may simply slide over the transmission lines when there is contact with the roller.

In some embodiments, the cable catcher comprises a webbing defining a cross-section of a passage of the cable catcher, so as to permit the transmission lines to extend through the passage.

A webbing of straps provides a cage of relatively low mass while being easy to handle. The webbing sections may be spaced apart according to demand. E.g., if webbing straps are longitudinally spaced apart by one or two metres, an end of a broken cable may hang a corresponding length from the cable catcher. A length of two metres may be short enough to prevent a broken wire contacting underlying infrastructure by a safe margin. The webbing straps may have a shorter longitudinal spacing, e.g. 1 metre or 0.5 metres.

In some embodiments, the webbing comprises stiffened sections.

The stiffened sections help to maintain the cross-section in an expanded configuration independent of the number of transmission lines and/or to reduce the number of carriers required to support the cable retainer below the transmission lines.

In some embodiments, the cable catcher comprises one or more links to receive tensioning elements by which it may be tensioned between the two pylons independently of the old transmission lines.

In some embodiments, the cable catcher comprises a deployment frame for hoisting one or more sections of the cable catcher simultaneously to the transmission lines, to facilitate deployment of the cable catcher.

In some embodiments, the deployment frame comprises a hook arrangement, the hook arrangement permitting the deployment frame to be suspended from the transmission lines together with one or more sections of the cable catcher.

In some embodiments, the deployment frame comprises webbing rails to which webbing may be attached and from which webbing may be detached.

This facilitates the deployment of the cable catcher. The deployment frame also facilitates the storage, preparation, transport, and/or removal of the cable catcher. For instance, the likelihood of entangling webbing sections is reduced by connecting the webbing sections to the deployment frame.

Conveniently, the links are constituted by connectors, such as snap links or karabiners, to which ropes may be connected for tensioning to an adjacent pylon.

Even though the cable catcher is intended to be supported by a carrier on the transmission lines, tensioning the cable catcher may be used to allow it to be supported independently of the transmission lines in the final stages (known as "sagging") of installing new transmission lines. This may be achieved by a tensioning element, such as a winch-supported rope or cable, connected to the cable catcher via a link of the cable catcher. This avoids the need to remove the cable catcher prior to the sagging of the new transmission lines.

However, it will be appreciated that it is not a requirement for a link to be able to support the cable catcher and a length of transmission line in a broken wire event.

In accordance with a second aspect of the invention, there is described a headboard as defined in claim 8.

The headboard is for use in the replacement of two or more old transmission lines extending between two pylons and to be simultaneously replaced by two or more new transmission lines.

The headboard comprises a first connector for connecting the headboard to the old transmission lines and a second connector for connecting the headboard to the new transmission lines thereby to permit, when connected, the new transmission lines to be pulled simultaneously with removing the old transmission lines, wherein the headboard comprises a deflector for facilitating, when pulled from one pylon to another pylon, passage of the headboard past a cable catcher-supporting carrier resting on the transmission lines. Passage of the headboard under a carrier resting on the transmission lines is facilitated because the deflector is adapted to lift a carrier of a cable catcher in accordance with embodiments of the first aspect as the headboard is pulled through a longitudinal passage of the cable catcher suspended from the carrier.

By way of the headboard, multiple old transmission lines and multiple new transmission lines may be replaced simultaneously, in a coordinated manner, in a restringing operation. Where a cable catcher in accordance with the first aspect is installed as a broken-wire-mitigating arrangement, it will be appreciated that supporting carriers are sitting on the old transmission lines. The headboard in accordance with the second aspect comprises a deflector that facilitates passage of the headboard past a carrier.

In some embodiments, the deflector comprises a bidirectional configuration to facilitate passage of the headboard past said carrier in either direction.

It will be assumed that the headboard is intended to be pulled predominantly in a forward direction facing the old transmission lines, with the new transmission lines connected to and tailing the headboard. The deflector is provided at least on the forward-facing side of the headboard, to deflect a carrier when the headboard is pulled in the forward direction. By "bidirectional configuration", a configuration is meant wherein the deflector also facilitates the passage of the headboard past a carrier when the headboard is pulled back, if this is for any reason required.

In some embodiments, the deflector comprises a ramp angled to lift the carrier from the transmission lines over the deflector as the deflector passes under the carrier.

A ramp allows the headboard to engage the carrier and allows the carrier to glide or roll over the deflector of the headboard. In the case of a bidirectional configuration, the deflector may be understood as comprising a leading chamfer and a trailing chamfer, the leading chamfer to lift the carrier of the transmission lines and the trailing chamfer to allow the carrier to glide or roll off the deflector gently.

In some embodiments, the deflector extends beyond the connectors, to ensure that the deflector of a headboard passing a carrier engages the carrier before the carrier comes into contact with the connectors.

This facilitates initial engagement of the deflector with the carrier. This allows the carrier to negotiate the deflector, and the headboard, without placing the full load borne by the carrier onto the connectors.

In some embodiments, the headboard comprises a balancing means to assist in maintaining the headboard at a pre-determined attitude.

This reduces the risk of the headboard twisting or turning and allows a restringing operation to be carried out at higher speed.

In some embodiments, the balancing means comprises a weight carrier convertible to an extended configuration or to a retracted configuration to better fit through the cable catcher.

In the extended configuration, the weights may be distributed for better balancing. This allows the balancing means to be extended while outside a cable catcher, for instance to facilitate mounting of weights on ground, or to spread the weights for improved balance during a multi-pylon run, or to allow the balancing means to be retracted during negotiation of the cable catcher to avoid the risk of entangling.

In some embodiments, the number of first connectors differs from the number of second connectors.

This allows a number of old transmission lines to be replaced by a different number of new transmission lines in a single restringing operation. In other words, the headboard is configured to connect a number of new transmission lines that differs from the number of old transmission lines. Thereby, for instance, older, so-called "quad formation" wire lines comprising four cables may be replaced in a single restringing operation by newer, so-called "triple formation" cables, which may be installed for their higher capacity.

The first connectors may have a different lateral spacing on the headboard than the second connectors.

This helps to keep the new transmission lines laterally spaced apart at a pre-determined distance independently of the lateral spacing of the old transmission lines. For instance, the pre-determined distances may be set to correspond to the configuration of existing wiring equipment (e.g., the spacing on running out wheels).

It would be possible to provide a large number of first and second connectors on the leading and trailing end of the headboard. For instance, by providing seven first connectors and seven second connectors, each laterally equally spaced apart, four old transmission lines could be connected to every odd first connector (the first, third, fifth, and seventh first connector), and three new transmission lines could be connected to every third second connector (the first, fourth, and seventh second connector). This increases the versatility of a single headboard design.

On the other hand, providing pre-determined connector arrangements reduces the risk of misalignment due to human error.

In accordance with a third aspect of the invention, there is described a system as defined by claim 13.

The system is for replacing transmission lines extending between a pair of pylons.

The system comprises a cable catcher in accordance with the first aspect, e.g., a cable catcher configured to be suspended below a plurality of said transmission lines from carriers resting on the plurality of said transmission lines. The cable catcher comprises a structure that includes a longitudinal passage extending in the direction of the transmission lines. The system further comprises a headboard in accordance with the second aspect, e.g., a headboard comprising a first connector for connection to ends of said transmission lines and a second connector for connection to ends of a plurality of replacement lines, and a deflector adapted to lift a carrier off the transmission lines on which it rests when the headboard is pulled through the longitudinal passage. The carriers are adapted to rest on the plurality of replacement lines (new transmission lines) after the headboard has been pulled past these.

The system in accordance with the third aspect combines the cable catcher of the first aspect and the headboard of the second aspect. The cable catcher of the third aspect may comprise any combination of features of the embodiments of the first aspect. The headboard of the third aspect may comprise any combination of features of the embodiments of the second aspect.

In accordance with a fourth aspect of the invention, there is described a method as defined by claim 14 of replacing a plurality of old transmission lines extending between a pair of pylons by a plurality of new transmission lines.

The method comprises the steps of providing a plurality of carriers to rest on the old transmission lines, and suspending a cable catcher below the transmission lines from the carriers resting on the old transmission lines. The cable catcher comprises a structure including a passage extending in the direction of the transmission lines. The method comprises the steps of providing a connection of the plurality of new transmission lines to a headboard, providing a connection of the plurality of old transmission lines to the headboard, and pulling the headboard through the passage of the cable catcher and thereby simultaneously replacing a plurality of old transmission lines with a plurality of new transmission lines between the pylons. The headboard deflects the carriers (by way of a deflector being used to lift the carriers off the transmission lines on which the carriers rest) to facilitate passage (of the headboard) past the carriers and to permit the carriers to come to rest on the new transmission lines after the headboard has been pulled past these.

In an embodiment, the step of suspending a cable catcher below the transmission lines comprises attaching one or more webbing sections to a deployment frame, suspending the deployment frame with webbing sections from the old transmission lines, detaching one or more webbing sections from the deployment frame, and attaching said webbing sections to one or more of the plurality of carriers.

In some embodiments, the step of suspending the cable catcher below the transmission lines comprises supporting the cable catcher from ropes suspended alongside the transmission lines.

This facilitates the deployment of the webbing sections.

The method in accordance with the fourth aspect uses the system of the third aspect, and as such combines the cable catcher of the first aspect and the headboard of the second aspect. The cable catcher used in the fourth aspect may comprise any combination of features of the embodiments of the first aspect. The headboard used in the fourth aspect may comprise any combination of features of the embodiments of the second aspect.

### Brief description of the Figures

Exemplary embodiments of the invention will now be described with reference to the Figures, in which:
Figure 1 shows a diagram illustrating a prior art safety system under a transmission line to be replaced;
Figure 2 shows a side view of exemplary components of a transmission line replacement system in accordance with an embodiment of the present invention;
Figure 3 shows a rear view of exemplary components of a transmission line replacement system in accordance with an embodiment of the present invention;
Figure 4 shows an isometric view of an optional component of a transmission line replacement system in accordance with an embodiment of the present invention;
Figure 5 shows an assembly of an optional component incorporating the component of Figure 4;
Figure 6 shows an isometric view illustrating an exemplary step of a transmission line replacement method in accordance with an embodiment of the present invention; and
Figure 7 shows an isometric view illustrating an exemplary step of a transmission line replacement method in accordance with an embodiment of the present invention.

### Description

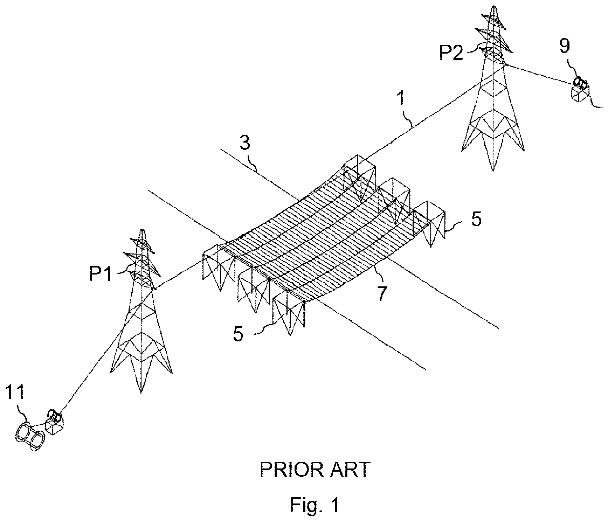

Figure 1 illustrates a prior art approach of replacing a section of a transmission line 1 between a pair of pylons constituted by a first pylon P1 and a second pylon P2. A puller 9 is provided to pull the stretch of (old) transmission line 1 in the direction of the second pylon P2. The end of the old transmission line is connected to a supply of new transmission line 11 and pulled to the second pylon P2 with the old transmission line 1.

To protect underlying infrastructure 3 (here: a road) from falling transmission lines in a broken wire situation, safety scaffolding 5 is erected on either side of the infrastructure 3 and nets 7 are installed between the scaffolding below the transmission line 1, at a suitable height to avoid obstructing the underlying infrastructure 3 and at a suitable height and width to catch any cable ends from a broken wire that might otherwise fall onto the underlying infrastructure 3.

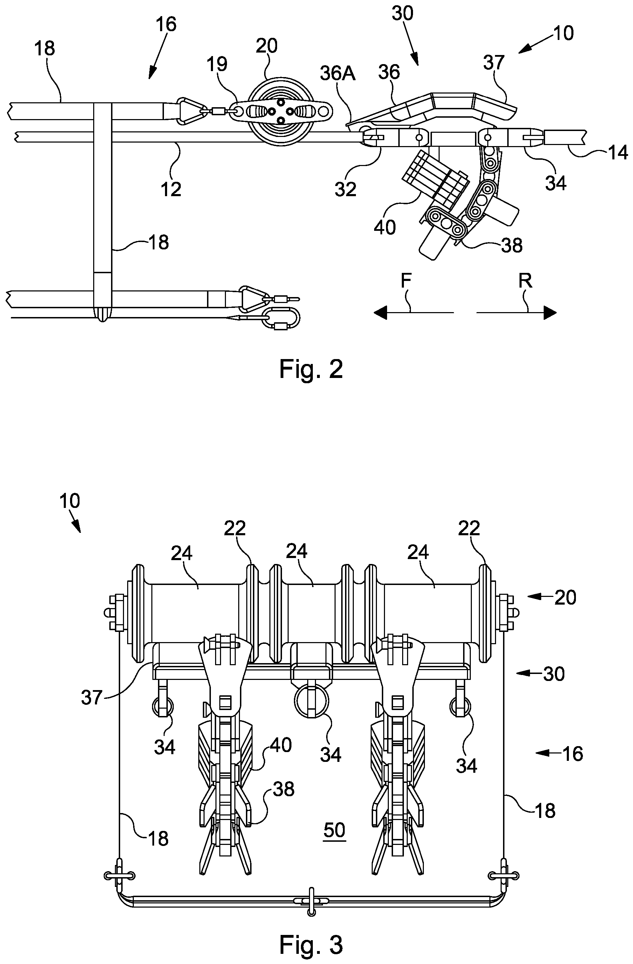

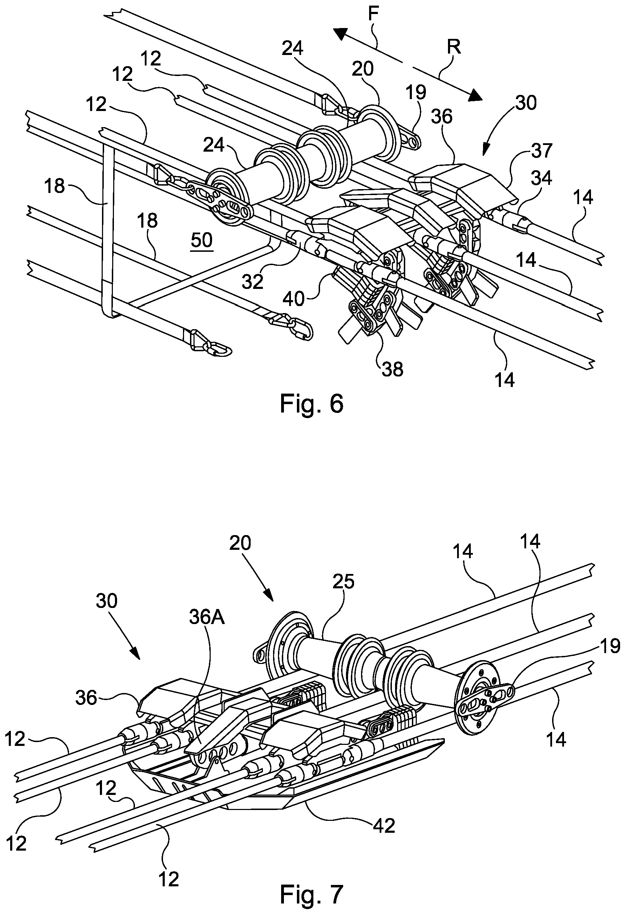

Figure 2 shows components of a transmission line replacement system 10 in accordance with an embodiment of the invention. The system is provided for replacing (old) transmission lines 12 to be replaced with replacement (new) transmission lines 14. For brevity, these will be referred to herein as old lines 12 and new lines 14. In the side elevation of Figure 2, one old line 12 and one new line 14 is visible, but it is understood that there are, in practice, more such transmission lines (see, e.g., Figure 6, showing four old lines 12 and three new lines 14).

Figure 2 shows a roller 20 constituting a carrier. Connected to the axle of the roller 20 via snap links or other suitable fasteners is a safety cage 16 constituting a cable catcher. The safety cage 16 comprises a webbing 18 which may comprise a plurality of stiffened webbing sections for stability. It is understood that, although only one roller 20 is shown in Figure 2, at least two rollers 20 are provided as carriers for the safety cage 16, one on either end of the safety cage 16. Depending on the length of safety cage 16 required, multiple webbing sections may be concatenated (connected in series) via rollers 20, e.g., a first safety cage section may be carried by a first roller and a second roller, and a second safety cage section may be carried by the (same) second roller and a third roller, and so forth.

Roller 20 rests on the old lines 12. The safety cage 16 is suspended from its rollers 20 and hangs below the old lines 12. Installed in such a manner, the safety cage 16 provides a longitudinal passage, i.e., a passage that extends along the longitudinal extension of old lines 12 (see longitudinal passage 50 in Figure 3). The safety cage 16 further comprises, attached to it, links 19 which may be used to manipulate and/or pull the safety cage 16, e.g. via ropes.

Figure 2 further shows a headboard 30 having a forward-facing side, facing in the direction indicated by arrow F, and a rear-facing side, facing in the direction indication by arrow R. The expressions "forward" and "rear" are defined with reference to the pull direction for restringing. I.e., when pulled "forward", the old lines 12 are withdrawn and replaced by the new lines 14.

The headboard 30 comprises, on the forward-facing side, first connectors 32 for connecting the old lines 12 to the headboard 30 and on the rear-facing side second connectors 34 for connecting the new lines 14 to the headboard 30. The first connectors 32 and second connectors 34 may comprise swivelable elements to provide a degree of freedom for the connections between connected lines and the headboard 30, to reduce the strain on the connectors. On the forward-facing side the headboard 30 comprises three ramps 36 constituting part of a deflector whose purpose will be explained below. The centre ramp 36 comprises a protrusion 36A extending forward of the other ramps 36. The protrusion 36A also extends forward (i.e., further to the left in Figure 2) of the first connectors 32. It will be appreciated from Figure 2 that when the headboard 30 is moved forward toward the roller 20, the protrusion 36A engages the roller 20 before the roller 20 comes into contact with the first connectors 32.

Further, three ramps 37 are provided on the rear-facing side. Although depicted without a protrusion akin the protrusion 36A on the centre ramp 36, the rear-facing ramps 37 may comprise a protrusion. The three ramps 37 constitute part of the deflector. As the deflector comprises forward-facing ramps, namely ramps 36, and rear-facing, namely ramps 37, the deflector has a bidirectional configuration.

The headboard 30 comprises two crocodile tails 38 constituting a balancing means and a weight carrier. The crocodile tails 38 allow a number of weights 40 to be mounted to the headboard. The crocodile tails 38 are articulated and thereby convertible between an extended configuration (not shown) and a retracted configuration in which the weights are pivoted close to the headboard 30. As an alternative, the crocodile tails 38 may, instead of being retractable, be detachable for removal by personnel prior to the headboard passing through the safety cage. The purpose of the weights 40 is to assist in maintaining the headboard 30 at a pre-determined attitude (here: horizontal, or parallel, to the transmission lines) by increasing inertia against tilting or rotation of the headboard 30.

Figure 3 shows a rear elevation schematically indicating how the headboard 30 engages the roller 20. Roller 20 comprises a contoured profile provided by a plurality of flanges 22 which define between them a plurality of (here: 3) tracks 24. The tracks 24 can be regarded as portions of reduced diameter (reduced relative to the flange diameter) and serve as cable-guiding means. The contoured profile may be provided in any suitable manner to define a number of tracks 24. The three ramps 36 of the headboard 30 are laterally spaced apart corresponding to the tracks 24, to fit inside the tracks 24 and to stay clear of the flanges 22.

Figure 3 shows that the safety cage 16 by virtue of the webbing 18 defines a longitudinal passage 50 for the headboard 30 and any transmission lines connected to it. The webbing 18 hangs under the transmission lines, low enough for the crocodile tails 38 (when swivelled upward, as shown) to fit within the passage 50. Furthermore, the crocodile tails 38 are laterally spaced across the headboard to ensure that they cannot come into contact and become entangled with the vertical sides of the webbing 18.

Prior to replacing the old lines 12, a safety cage 16 constituting a cable catcher is connected via fasteners to the axles of rollers 20 and pulled over the old lines 12. Rollers 20 may be moved using any suitable tool, such as a tug, and may also be manipulated using ropes, to position one or more sections of safety cages 16 longitudinally along the old lines 12. This helps ensuring that safety cage 16 is positioned appropriately to protect underlying infrastructure. The links 19 allow the manipulation of the safety cage 16 during installation to be facilitated. For instance, ropes for manipulation may be connected to the links 19. Further, once installed, ropes or cables tied to the links 19 may be used to secure the safety cage 16 to a pylon in order to prevent the safety cage 16 from sliding from in its longitudinal position along the transmission line.

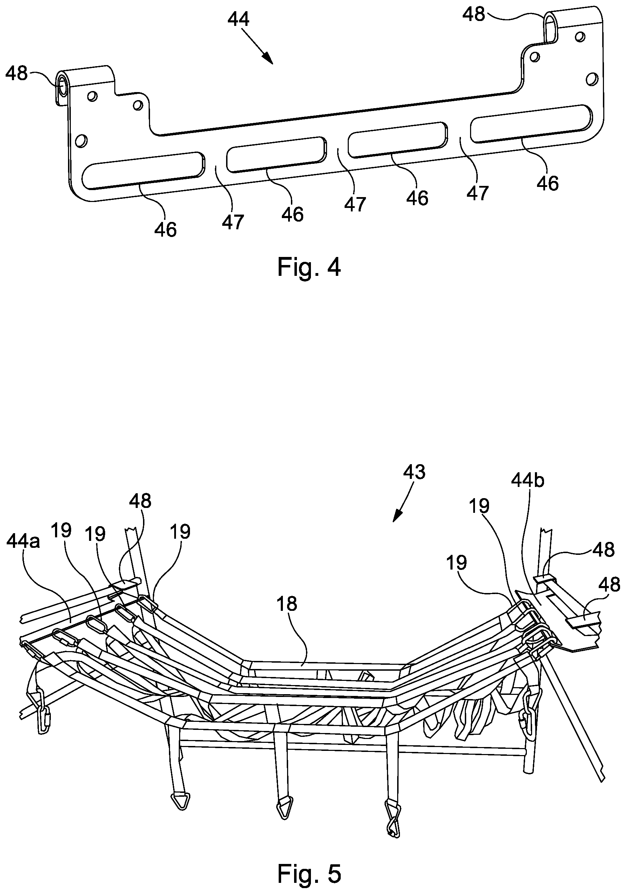

A deployment frame 43, depicted in Figure 5, may be used to facilitate the deploying of the webbing 18 for safety cage 16. The deployment frame comprises two deployment frame elements 44, shown in Figure 4. A deployment frame element 44 comprises a webbing rail 46 and a hook arrangement 48. The webbing rail 46 allows a plurality karabiner links 19, such as may be comprised with the webbing 18, to be connected to the deployment frame element 44. The webbing rail 46 may comprise one or more webbing separators 47 provided to keep links 19 from different webbing sections apart.

Deployment frame elements 44 are intended to be used in pairs consisting of a first deployment frame 44a and a second deployment frame 44b (see assembly of Figure 5). For the installation of the safety cage 16, one or more webbing sections are connected, e.g., using the links 19, to the webbing rails 46 of first deployment frame element 44a and the second deployment frame element 44b. The deployment frame element 44 comprises a plurality (here: 3) webbing separators 47, dividing the deployment rail 46 into four discrete subunits. For instance, a plurality (here: 4) of webbing sections may be connected to the webbing rail 46, one webbing section to each subunit. If used in this manner, the webbing separators 47 help to prevent entangling of webbing sections, and thereby allow the webbing sections to be arranged closely together on the deployment frame element 44 at ground level. Thereby, the deployment frame 43 facilitates transport and storage of webbing sections in a configuration ready for deployment.

With one or more webbing sections connected to the webbing rail 46, the deployment frame, comprising the first deployment frame element 44a and the second deployment frame element 44b, may be hoisted to the level of the old lines and suspended from the outer transmission lines by the hook arrangement 48. With the webbing sections hung from the deployment frame, the links of the first end of a first webbing section may be manually disconnected from the deployment frame 43 and connected to a first roller 20. The first webbing section is, at this stage, suspended from the first roller 20 at one end, and at the other end from the webbing rail 46 of the deployment frame 43. The roller 20 may then be pulled away from the deployment tower to expand the first webbing section. Once expanded, the links of the second end of the first webbing section may be disconnected from the deployment frame and connected to a second roller 20, so that the first webbing section is suspended from the first and second rollers. The remaining webbing sections remain suspended from the deployment frame 43. If it is desired to deploy a second webbing section concatenated to the first webbing section, the links of the first ends of the second webbing section may be disconnected from the deployment frame 43 and connected to the second roller 20, and the second webbing section may be expanded. In this manner, a plurality of webbing sections may be connected to a series of rollers, to deploy concatenated webbing sections.

As the rollers 20 are pulled over the ropes, the old lines 12 engage in their laterally corresponding tracks 24, so that the old lines 12 are kept laterally spaced apart. For instance, as shown in Figure 6, each of the outer tracks 24 may engage with two old lines 12. By keeping the old lines 12 spaced apart, the tracks 24 help to prevent all the old lines 12 sliding to one side of the roller 20 and causing the roller 20 to tilt. Once positioned, the rollers 20 rest on the old lines 12 and the safety cage 16 remains suspended below the old lines 12, and thus provides a longitudinal passage such as longitudinal passage 50 illustrated in Figure 3.

In an alternative arrangement, the safety cage 16 is supported on ropes suspended between pylons alongside the transmission lines. In some embodiments, the ropes may comprise two ropes, one on either side of the transmission lines. The safety cage and cable catcher is supported, at least in part, by the ropes such that it is suspended below the transmission lines, and still includes features, such as rollers, that allow it to rest on the transmission lines, when required from time to time. The transmission lines remain within the longitudinal passage of the cable catcher/safety cage. In this alternative arrangement, the rollers are not required to support the weight of the cable catcher/safety cage on the transmission lines, and so may be of a simpler construction. For example, the rollers may not be configured to rotate on axles as such, but may simply slide over the transmission lines when there is contact with the roller.

The old lines 12 and the new lines 14 are connected to the headboard 30 and the old lines 12 are pulled, using a suitable instrument such as a winch, in the forward direction F from a deployment pylon towards a target pylon, pulling with them the headboard 30 and the new lines 14, thereby replacing the transmission lines. In Figure 5, it is illustrated that the use of the headboard 30 allows four old lines 12 to be replaced simultaneously by three new lines 14. As such, the number of first connectors 32 for old lines 12 on the headboard 30 differs from the number of second connectors 34 for new lines 14. Also, the first connectors 32 have a different lateral spacing than the second connectors 34.

Figure 6 shows the headboard 30 about to approach the roller 20. It will be appreciated that the rollers 20 rest on the old lines 12 and support the cage 16 depending from the rollers 20. Of the four old lines 12, two lines extend through in the left of the three tracks 24 and two lines through the right of the three tracks 24.

As the headboard 30 approaches the roller 20, the forward facing protrusion 36A of the centre ramp 36 makes initially contact with the corresponding centre track 24 of the roller 20, thereby facilitating an initial engagement of the deflector (ramp 36) with the carrier (roller 20). As the protrusion 36A engages the centre track 24, the ramp 36 lifts the roller 20 up from the old lines 12 and, as the headboard 30 is pulled forward, each of the three ramps 36 engages with its corresponding track 24 and guides the roller 20 over the headboard 30 as it is pulled under the roller 20. By way of the protrusion 36A, the initial engagement and lifting from the old lines 12 is achieved while avoiding contact between the roller 20 and the first connectors 32 at least during the initial contact phase, thereby avoiding that the first connectors 32 experience a peak load that may be exerted by the roller 20 and the safety cage 16.

The headboard 30 passes under the roller 20 and continues to support the roller 20 while it is not resting directly on the old lines 12 or new lines 14, allowing the roller 20 to maintain its function as a carrier of the cable catcher. As the headboard 30 is pulled further forward, roller 20 rolls off the headboard 30 via the rear-facing ramps 37 guiding the roller 20 onto the new lines 14. The rolling off via the rear-facing ramps 37 reduces jumping or jerking and facilitates the gentle engagement of each of the new lines 14 in one of the tracks 24.

In Figures 6 and 7, the there are three new lines 14 laterally spaced apart so that one new line 14 each is located in one track 24 of the roller. Throughout the phase of the headboard 30 being pulled past the roller 20, the roller 20 rests either on the old lines 12, the headboard 30, or on the new lines 14, and remains therefore able to support the safety cage 16. Note that the safety cage 16 is not shown in Figure 7 for clarity.

It will be understood that the carrier 20 may have any number of cable-guiding means, such as flanges 22 and tracks 24 of the roller 20, and that the deflector may have any configuration. The number of cable-guiding means and the configuration of the deflector may be chosen according to the number of transmission lines to be replaced and the number of replacement transmission lines (here: four old lines to be replaced by three new lines).

In an embodiment, shown in Figure 7, the tracks 24 of roller 20 are not cylindrically contoured, but have a frustoconical taper 25 further defining the contour of the track 24. By way of the contoured track, the old lines 12 and the new lines 14 are biased towards the thinnest diameter of the taper 25, towards the laterally outer end of the roller 20. Similarly, the centre track 24 has a hyperboloid, or double frustoconical, taper with the narrowest circumference in the middle of the roller 20 to bias the centre one of the new lines 14 towards the middle of the roller 20.

The carrier may comprise any contour, e.g. any number of tapered portions and/or flanges, to bias and/or confine the lateral position according to the number of transmission lines.

By way of the deflecting ramps 36 the headboard may be pulled past each roller 20 until reaching the pylon on the other side of the transmission line run.

Although described with reference to a pair of pylons, a restringing operation or "pulling section" may be several pylons long, and so the old and new transmission lines need not be disconnected and reconnected at each pylon. Thus, a safety cage 16 may not be required between each pair of pylons, for instance when there is no underlying infrastructure to be protected.

The crocodile tails 38 can be extended by way of their articulated configuration to improve the balance and to better mitigate twisting and/or rotating. For instance, while not inside a safety cage 16, the headboard 30 may be pulled at greater speed and as such be susceptible to and/or cause more vibrations. The crocodile tails 38 provide a damping effect. As the headboard 30 approaches a safety cage 16, the crocodile tails 38 may be retracted to better fit through the passage 50.

In Figure 7, an optional skid pan 42 is shown mounted to the underside of the headboard 30. The skid pan 42 provides a cover or shield on the underside of the headboard 30 and may be mounted to the headboard 30 before it enters a passage 50 of a safety cage 16, after the crocodile tails 38 have been removed. By way of the skid pan 42 the risk is reduced of components on the underside of the headboard 30 becoming entangled with webbing 18 of the safety cage 16. When outside a safety cage 16, the skid pan 42 may be replaced and the crocodile tails 38 extended to provide the balancing function to reduce twisting of the headboard.

If, for any reason, the headboard 30 needs to be pulled back, it is able to pass the rollers 20 by virtue of the rear-facing ramps 37 in the same manner as described with reference to Figures 6 and 7. By way of the rear-facing ramps 37, the headboard 30 may be considered as having a bilateral configuration, facilitating the passage of the headboard 30 under a roller 20 in either direction (forward and backward).

After the headboard 30 has progressed through a pulling section, which may be several pylons long, it is pulled past the last pylon towards a pulling winch at ground level. The old lines 12 will be wound on the drums of the pulling winch and are ready for removal, and the new lines 14 are installed throughout the length of the pulling section. The old lines 12 and the new lines 14 can be detached from the headboard.

Even though the safety cage 16 is supportable by the rollers 20 on the transmission lines, it may be desirable to be able to tension the safety cage 16 to adjacent pylons so as to support the safety cage 16 independently of any transmission lines. This may assist in one of the final phases of restringing phase, the so-called "sagging", which can be carried out before having to pull the safety cage 16 away. By way of the links 19, the safety cage 16 may be tensioned to pylons or to winches on the ground (via pylons) using ropes and/or cables, to remove the load of the safety cage 16 from the transmission lines.

In a broken wire event within the passage 50, either of an old line 12 or of a new line 14, the end of a broken wire falls onto the webbing 18 of the safety cage 16 and so prevents the broken end from falling further onto an underlying infrastructure. The safety cage 16 remains supported by the rollers 20 on the remaining transmission lines. The contour of the roller 20 helps to keep the remaining transmission lines laterally spaced apart even if the roller is slightly listing.

Tests have shown that a safety cage 16 in accordance with the described embodiment, in which four old lines 12 are replaced by three new lines 14, can support two broken wires by the remaining five intact lines. In other words, five lines suffice to support the rollers 20 and the safety cage 16. Bearing in mind that a broken-wire event is a rare occurrence, it is safe to assume for practical purposes that there will not be more than one broken-wire event at a time. For this reason, the safety cage 16 supported on the transmission lines provides a level of protection that is suitable reliable for practical purposes.

The lateral sections of the webbing 18 may be spaced apart in the longitudinal direction, according to requirements. For instance, if these are spaced apart about 2.5 metres, a broken wire end may hang, due to the stiffness of the cable, less than 2.5 metres from the lowest point of the safety cage, which may be acceptable. Different webbing with a shorter longitudinal spacing may be provided if required.

## Claims

1. A cable catcher (16) for use as a broken-wire support in the replacement of two or more old transmission lines (12) extending between two pylons and to be simultaneously replaced by two or more new transmission lines (14), the cable catcher (16) comprising a carrier (20) comprising a structure permitting it to extend over laterally spaced apart transmission lines and configured to rest on the two or more old transmission lines (12) or on the two or more new transmission lines (14) and permitting the cable catcher (16) to be suspended from the two or more old transmission lines (12) or the two or more new transmission lines (14), wherein the cable catcher (16) includes a structure (18) to provide a longitudinal passage below, and extending in the direction of, the transmission lines.

2. The cable catcher in accordance with claim 1, wherein the carrier comprises a cable-guiding means (22, 24) for keeping two or more old transmission lines apart.

3. The cable catcher (16) in accordance with claim 1 or claim 2, wherein the carrier (20) comprises a roller, and wherein optionally the roller has a profile to define one or more portions of a reduced diameter (24), the reduced diameter portions providing circumferential tracks constituting the cable-guiding means.

4. The cable catcher (16) in accordance with any one of the preceding claims, wherein the cable catcher (16) is configured to be supported on ropes suspended alongside the transmission lines.

5. The cable catcher (16) in accordance with any one of the preceding claims, comprising a webbing (18) defining the structure providing said longitudinal passage of the cable catcher, wherein optionally the webbing comprises stiffened sections.

6. The cable catcher (16) in accordance with any one of the preceding claims, further comprising a deployment frame (44) for hoisting one or more sections of the cable catcher simultaneously to the transmission lines (12), to facilitate deployment of the cable catcher (16), wherein optionally the deployment frame comprises a hook arrangement, the hook arrangement (48) permitting the deployment frame to be suspended from the transmission lines (12) together with one or more sections of the cable catcher, and/or wherein optionally the deployment frame comprises webbing rails (46) to which webbing may be attached and from which webbing may be detached.

7. The cable catcher (16) in accordance with any one of the preceding claims, further comprising one or more links to receive tensioning elements by which it may be tensioned between the two pylons independently of the old transmission lines.

8. A headboard (30) for use in the replacement of two or more old transmission lines (12) extending between two pylons and to be simultaneously replaced by two or more new transmission lines (14), the headboard (30) comprising a first connector (32) for connecting the headboard to the old transmission lines and a second connector (34) for connecting the headboard to the new transmission lines thereby to permit, when connected, the new transmission lines to be pulled simultaneously with removing the old transmission lines, wherein the headboard (30) comprises a deflector (36) adapted to lift a carrier (20) of a cable catcher (16) in accordance with any one of the preceding claims, whereby the lifting of a carrier (20) from the transmission lines (12, 14) by the deflector (36) facilitates passage of the headboard (30) under the carrier (20) by allowing the carrier (20) to glide or roll over the headboard (30) when the headboard is pulled from one pylon to another pylon in a longitudinal passage of said cable catcher suspended from said carrier.

9. The headboard (30) in accordance with claim 8, wherein the deflector (36) comprises a bidirectional configuration to facilitate passage of the headboard past said carrier in either direction.

10. The headboard (30) in accordance with claim 8 or 9, wherein the deflector comprises a ramp (36) angled to lift the carrier from the transmission lines over the deflector as the deflector passes under the carrier, wherein optionally the deflector extends beyond the connectors to ensure that the deflector of a headboard passing a carrier engages the carrier before the carrier comes into contact with the connectors.

11. The headboard (30) in accordance with any one of claims 8 to 10, wherein the headboard comprises a balancing means (38) to assist in maintaining the headboard at a pre-determined attitude, wherein optionally the balancing means comprises a weight carrier convertible to an extended configuration and to a retracted configuration to fit through a safety webbing system.

12. The headboard (30) in accordance with any one of claims 8 to 11, wherein the number of first connectors (32) differs from the number of second connectors (34).

13. A system for simultaneously replacing two or more old transmission lines (12) extending between two pylons by two or more new transmission lines (14), the system comprising:
a cable catcher (16) in accordance with any one of claims 1 to 7, and
a headboard (30) in accordance with any one of claims 8 to 12,
wherein the carriers (20) are adapted to rest on the new transmission lines after the headboard has been pulled past these.

14. A method of replacing a plurality of old transmission lines (12) extending between a pair of pylons by a plurality of new transmission lines (14), the method comprising the steps of:
providing a plurality of carriers (20) to rest on the old transmission lines,
suspending a cable catcher (30) below the transmission lines (12) from the carriers (20) resting on the old transmission lines (12), the cable catcher (16) comprising a structure (18) including a longitudinal passage extending in the direction of the transmission lines,
providing a connection (34) of the plurality of new transmission lines (14) to a headboard (30),
providing a connection (32) of the plurality of old transmission lines (12) to the headboard (30),
pulling the headboard (30) through the longitudinal passage of the cable catcher (16) and thereby simultaneously replacing a plurality of old transmission lines with a plurality of new transmission lines between the pylons, and
using a deflector (36) of the headboard (30) to lift the carriers (20) off the transmission lines (12) on which the carriers rest to facilitate passage of the headboard past the carriers and to permit the carriers (20) to come to rest on the new transmission lines (14) after the headboard has been pulled past these.

15. The method of claim 14, wherein suspending a cable catcher (16) below the transmission lines (12) comprises:
attaching one or more webbing sections (18) to a deployment frame (44),
suspending the deployment frame (44) with webbing sections (18) from the old transmission lines (12),
detaching one or more webbing sections (18) from the deployment frame (44), and
attaching said webbing sections (18) to one or more of the plurality of carriers (20).

## Patentansprüche

1. Kabelfänger (16) zur Verwendung als eine Stütze für gebrochenen Draht beim Ersetzen von zwei oder mehr alten Übertragungsleitungen (12), die sich zwischen zwei Masten erstrecken und gleichzeitig durch zwei oder mehr neue Übertragungsleitungen (14) ersetzt werden sollen, wobei der Kabelfänger (16) einen Träger (20) umfasst, der eine Struktur umfasst, die es ermöglicht, dass er sich über seitlich voneinander beabstandete Übertragungsleitungen erstreckt, und dafür konfiguriert ist, auf den zwei oder mehr alten Übertragungsleitungen (12) oder auf den zwei oder mehr neuen Übertragungsleitungen (14) aufzuliegen und zu ermöglichen, dass der Kabelfänger (16) an den zwei oder mehr alten Übertragungsleitungen (12) oder den zwei oder mehr neuen Übertragungsleitungen (14) aufgehängt wird, wobei der Kabelfänger (16) eine Struktur (18) einschließt, um einen Längsdurchgang unterhalb der Übertragungsleitungen und sich in der Richtung derselben erstreckend bereitzustellen.

2. Kabelfänger (16) nach Anspruch 1, wobei der Träger ein Kabelführungsmittel (22, 24) zum Getrennthalten von zwei oder mehr alten Übertragungsleitungen umfasst.

3. Kabelfänger (16) nach Anspruch 1 oder Anspruch 2, wobei der Träger (20) eine Rolle umfasst und wobei wahlweise die Rolle ein Profil aufweist, um einen oder mehrere Abschnitte mit einem verringerten Durchmesser (24) zu definieren, wobei die Abschnitte mit verringertem Durchmesser Umfangsspuren bereitstellen, welche das Kabelführungsmittel darstellen.

4. Kabelfänger (16) nach einem der vorhergehenden Ansprüche, wobei der Kabelfänger (16) dafür konfiguriert ist, an Seilen gestützt zu werden, die entlang der Übertragungsleitungen aufgehängt sind.

5. Kabelfänger (16) nach einem der vorhergehenden Ansprüche, der ein Gurtband (18) umfasst, das die Struktur definiert, die den Längsdurchgang des Kabelfängers bereitstellt, wobei wahlweise das Gurtband versteifte Sektionen umfasst.

6. Kabelfänger (16) nach einem der vorhergehenden Ansprüche, der ferner einen Einsatzrahmen (44) zum gleichzeitigen Hochziehen einer oder mehrerer Sektionen des Kabelfängers zu den Übertragungsleitungen (12), um einen Einsatz des Kabelfängers (16) zu erleichtern, wobei wahlweise der Einsatzrahmen eine Hakenanordnung umfasst, wobei die Hakenanordnung (48) ermöglicht, dass der Einsatzrahmen zusammen mit einer oder mehreren Sektionen des Kabelfängers an den Übertragungsleitungen (12) aufgehängt wird, und/oder wobei wahlweise der Einsatzrahmen Gurtbandschienen (46) umfasst, an denen Gurtband befestigt werden kann und von denen Gurtband gelöst werden kann.

7. Kabelfänger (16) nach einem der vorhergehenden Ansprüche, der ferner ein oder mehrere Verbindungsglieder umfasst, um Spannelemente aufzunehmen, durch die er unabhängig von den alten Übertragungsleitungen zwischen den Masten gespannt werden kann.

8. Kopfbrett (30) zur Verwendung beim Ersetzen von zwei oder mehr alten Übertragungsleitungen (12), die sich zwischen zwei Masten erstrecken und gleichzeitig durch zwei oder mehr neue Übertragungsleitungen (14) ersetzt werden sollen, wobei das Kopfbrett (30) einen ersten Verbinder (32) zum Verbinden des Kopfbretts mit den alten Übertragungsleitungen und einen zweiten Verbinder (34) zum Verbinden des Kopfbretts mit den neuen Übertragungsleitungen umfasst, um dadurch zu ermöglichen, wenn es verbunden ist, dass die neuen Übertragungsleitungen gleichzeitig mit dem Entfernen der alten Übertragungsleitungen gezogen werden, wobei das Kopfbrett (30) einen Ablenker (36) umfasst, der dafür angepasst ist, einen Träger (20) eines Kabelfängers (16) nach einem der vorhergehenden Ansprüche anzuheben, wobei das Anheben eines Trägers (20) von den Übertragungsleitungen (12, 14) durch den Ablenker (36) den Durchgang des Kopfbretts (30) unter dem Träger (20) erleichtert, durch Ermöglichen, dass der Träger (20) über das Kopfbrett (30) gleitet oder rollt, wenn das Kopfbrett in einem Längsdurchgang des Kabelfängers, der an dem Träger aufgehängt ist, von einem Mast zu einem anderen Mast gezogen wird.

9. Kopfbrett (30) nach Anspruch 8, wobei der Ablenker (36) eine Zweirichtungskonfiguration aufweist, um einen Durchgang des Kopfbretts an dem Träger vorbei in beiden Richtungen zu erleichtern.

10. Kopfbrett (30) nach Anspruch 8 oder 9, wobei der Ablenker eine Rampe (36) umfasst, die abgewinkelt ist, um den Träger von den Übertragungsleitungen über den Ablenker anzuheben, wenn der Ablenker unter dem Träger hindurchgeht, wobei wahlweise sich der Ablenker über die Verbinder hinaus erstreckt, um sicherzustellen, dass der Ablenker eines Kopfbretts, das einen Träger passiert, den Träger in Eingriff nimmt, bevor der Träger in Berührung mit den Verbindern kommt.

11. Kopfbrett (30) nach einem der Ansprüche 8 bis 10, wobei das Kopfbrett ein Balanciermittel (38) umfasst, um ein Halten des Kopfbretts in einer vorbestimmten Lage zu unterstützen, wobei wahlweise das Balanciermittel einen Gewichtsträger umfasst, der zu einer ausgefahrenen Konfiguration und zu einer eingezogenen Konfiguration umgewandelt werden kann, um durch eine Sicherheitsgurtbandanlage zu passen.

12. Kopfbrett (30) nach einem der Ansprüche 8 bis 11, wobei sich die Anzahl von ersten Verbindern (32) von der Anzahl von zweiten Verbindern (34) unterscheidet.

13. System zum gleichzeitigen Ersetzen von zwei oder mehr alten Übertragungsleitungen (12), die sich zwischen zwei Masten erstrecken, durch zwei oder mehr neue Übertragungsleitungen (14), wobei das System Folgendes umfasst:
einen Kabelfänger (16) nach einem der Ansprüche 1 bis 7, und
ein Kopfbrett (30) nach einem der Ansprüche 8 bis 12,
wobei die Träger (20) dafür angepasst sind, auf den neuen Übertragungsleitungen aufzuliegen, nachdem das Kopfbrett an diesen vorbei gezogen worden ist.

14. Verfahren zum Ersetzen mehrerer alter Übertragungsleitungen (12), die sich zwischen einem Paar von Masten erstrecken, durch mehrere neue Übertragungsleitungen (14), wobei das Verfahren die folgenden Schritte umfasst:
Bereitstellen mehrerer Träger (20), um auf den alten Übertragungsleitungen aufzuliegen,
Aufhängen eines Kabelfängers (30) unterhalb der Übertragungsleitungen (12) an den Trägern (20), die auf den alten Übertragungsleitungen (12) aufliegen, wobei der Kabelfänger (16) eine Struktur (18) umfasst, die einen Längsdurchgang einschließt, der sich in der Richtung der Übertragungsleitungen erstreckt,
Bereitstellen einer Verbindung (34) der mehreren neuen Übertragungsleitungen (14) mit einem Kopfbrett (30),
Bereitstellen einer Verbindung (32) der mehreren alten Übertragungsleitungen (12) mit dem Kopfbrett (30),
Ziehen des Kopfbretts (30) durch den Längsdurchgang des Kabelfängers (16) und dadurch gleichzeitig Ersetzen mehrerer alter Übertragungsleitungen durch mehrere neue Übertragungsleitungen zwischen den Masten, und
Verwenden eines Ablenkers (36) des Kopfbretts (30), um die Träger (20) von den Übertragungsleitungen (12) anzuheben, auf denen die Träger aufliegen, um einen Durchgang des Kopfbretts an den Trägern vorbei zu erleichtern und um zu ermöglichen, dass die Träger (20) auf den neuen Übertragungsleitungen (14) aufzuliegen kommen, nachdem das Kopfbrett an diesen vorbei gezogen worden ist.

15. Verfahren nach Anspruch 14, wobei das Aufhängen des Kabelfängers (16) unterhalb der Übertragungsleitungen (12) Folgendes umfasst:
Befestigen einer oder mehrerer Gurtbandsektionen (18) an einem Einsatzrahmen (44),
Aufhängen des Einsatzrahmens (44) mit Gurtbandsektionen (18) an den alten Übertragungsleitungen (12),
Lösen einer oder mehrerer Gurtbandsektionen (18) von dem Einsatzrahmen (44), und
Befestigen der Gurtbandsektionen (18) an einem oder mehreren von den mehreren Trägern (20).

## Revendications

1. Rattrape-câble (16) pour utilisation comme un support de fil brisé dans le remplacement de deux anciennes lignes de transmission (12) ou plus s'étendant entre deux pylônes et à remplacer simultanément par deux nouvelles lignes de transmission (14) ou plus, le rattrape-câble (16) comprenant un support (20) comprenant une structure permettant de l'étendre sur des lignes de transmission espacées de manière latérale et configuré afin de s'appuyer sur les deux anciennes de lignes de transmission (12) ou plus ou sur les deux nouvelles lignes de transmission (14) ou plus et permettant au capteur de câble (16) d'être suspendu sur les deux anciennes de lignes de transmission (12) ou plus ou sur les deux nouvelles lignes de transmission (14) ou plus, dans lequel le rattrape-câble (16) inclut une structure (18) permettant de fournir un passage longitudinal sous les lignes de transmission et s'étendant dans leur direction.

2. Rattrape-câble selon la revendication 1, dans lequel le support comprend un moyen de guidage de câble (22, 24) permettant de maintenir deux anciennes lignes de transmission ou plus espacées.

3. Rattrape-câble (16) selon la revendication 1 ou la revendication 2, dans lequel le support (20) comprend un galet, et dans lequel éventuellement le galet présente un profil permettant de définir une ou plusieurs partie(s) d'un diamètre réduit (24), les parties de diamètre réduit fournissant des pistes circonférentielles constituant le moyen de guidage de câble.

4. Rattrape-câble (16) selon l'une quelconque des revendications précédentes, dans lequel le rattrape-câble (16) est configuré afin d'être supporté sur des cordes suspendues le long des lignes de transmission.

5. Rattrape-câble (16) selon l'une quelconque des revendications précédentes, comprenant une sangle (18) définissant la structure fournissant ledit passage longitudinal du rattrape-câble, dans lequel éventuellement la sangle comprend des sections renforcées.

6. Rattrape-câble (16) selon l'une quelconque des revendications précédentes, comprenant en outre un cadre de déploiement (44) permettant de lever une ou plusieurs section(s) du rattrape-câble simultanément aux lignes de transmission (12), afin de faciliter le déploiement du rattrape-câble (16), dans lequel éventuellement le cadre de déploiement comprend un agencement à crochet, l'agencement à crochet (48) permettant de suspendre le cadre de déploiement depuis les lignes de transmission (12) avec une ou plusieurs section(s) du rattrape-câble, et/ou dans lequel éventuellement le cadre de déploiement comprend des rails de sangle (46) auxquels la sangle peut être fixée et d'où la sangle peut être détachée.

7. Rattrape-câble (16) selon l'une quelconque des revendications précédentes, comprenant en outre un ou plusieurs lien(s) permettant de recevoir des éléments de tension par lesquels il peut être tendu entre les deux pylônes indépendamment des anciennes lignes de transmission.

8. Ridelle frontale (30) pour utilisation dans le remplacement de deux anciennes lignes de transmission (12) ou plus s'étendant entre deux pylônes et à simultanément remplacer par deux nouvelles lignes de transmission (14) ou plus, la ridelle frontale (30) comprenant un premier connecteur (32) permettant de connecter la ridelle frontale aux anciennes lignes de transmission et un second connecteur (34) afin de afin de connecter la ridelle frontale aux nouvelles lignes de transmission, en permettant ainsi, une fois connectée, aux nouvelles lignes de transmission d'être tirées simultanément avec l'enlèvement des anciennes lignes de transmission, dans lequel la ridelle frontale (30) comprend un déflecteur (36) conçu afin de lever un support (20) d'un rattrape-câble (16) conformément à l'une quelconque des revendications précédentes, moyennant quoi le levage d'un support (20) des lignes de transmission (12, 14) par le déflecteur (36) facilite le passage de la ridelle frontale (30) sous le support (20) en permettant au support (20) de glisser ou de rouler sur la ridelle frontale (30) lorsque la ridelle frontale est tirée d'un pylône à l'autre dans un passage longitudinal dudit rattrape-câble suspendu depuis ledit support.

9. Ridelle frontale (30) selon la revendication 8, dans laquelle le déflecteur (36) comprend une configuration bidirectionnelle permettant de faciliter le passage de la ridelle frontale au-delà dudit support dans chaque direction.

10. Ridelle frontale (30) selon la revendication 8 ou 9, dans laquelle le déflecteur comprend une rampe (36) inclinée de manière à lever le support des lignes de transmission sur le déflecteur lorsque le déflecteur passe sous le support, dans lequel éventuellement le déflecteur s'étend au-delà des connecteurs afin de s'assurer que le déflecteur d'une ridelle frontale passant un support met en prise le support avant qu'il n'entre en contact avec les connecteurs.

11. Ridelle frontale (30) selon l'une quelconque des revendications 8 à 10, dans laquelle la ridelle frontale comprend un moyen d'équilibrage (38) afin d'aider à maintenir la ridelle frontale selon une attitude prédéterminée, dans laquelle éventuellement le moyen d'équilibrage comprend un support de poids convertible en une configuration étendue et en une configuration rétractée afin de s'adapter à travers un système de sangle de sécurité.

12. Ridelle frontale (30) selon l'une quelconque des revendications 8 à 11, dans lequel le nombre de premiers connecteurs (32) diffère du nombre de seconds connecteurs (34).

13. Système permettant de remplacer simultanément deux anciennes lignes de transmission (12) ou plus s'étendant entre deux pylônes par deux nouvelles lignes de transmission (14) ou plus, le système comprenant :
un rattrape-câble (16) selon l'une quelconque des revendications 1 à 7, et
une ridelle frontale (30) selon l'une quelconque des revendications 8 à 12,
dans lequel les supports (20) sont conçus afin de s'appuyer sur les nouvelles lignes de transmission une fois que la ridelle frontale a été tirée au-delà de celles-ci.

14. Procédé de remplacement d'une pluralité d'anciennes lignes de transmission (12) s'étendant entre une paire de pylônes par une pluralité de nouvelles lignes de transmission (14), le procédé comprenant les étapes consistant à :
prévoir une pluralité de supports (20) afin de s'appuyer sur les anciennes lignes de transmission,
suspendre un rattrape-câble (30) sous les lignes de transmission (12) depuis les supports (20) s'appuyant sur les anciennes lignes de transmission (12), le rattrape-câble (16) comprenant une structure (18) incluant un passage longitudinal s'étendant dans la direction des lignes de transmission,
prévoir une connexion (34) de la pluralité de nouvelles lignes de transmission (14) à une ridelle frontale (30),
prévoir une connexion (32) de la pluralité d'anciennes lignes de transmission (12) à la ridelle frontale (30),
tirer la ridelle frontale (30) à travers le passage longitudinal du rattrape-câble (16) et ainsi remplacer simultanément une pluralité d'anciennes lignes de transmission par une pluralité de nouvelles lignes de transmission entre les pylônes, et
utiliser un déflecteur (36) de la ridelle frontale (30) permettant de lever les supports (20) hors des lignes de transmission (12) sur lesquelles les supports s'appuient afin de faciliter le passage de la ridelle frontale au-delà des supports et permettre aux supports (20) de venir s'appuyer sur les nouvelles lignes de transmission (14) après que la ridelle frontale a été tirée au-delà de celles-ci.

15. Procédé selon la revendication 14, dans lequel la suspension d'un rattrape-câble (16) sous les lignes de transmission (12) comprend :
la fixation d'une ou plusieurs section(s) de sangle (18) à un cadre de déploiement (44),
la suspension du cadre de déploiement (44) avec des sections de sangle (18) depuis les anciennes lignes de transmission (12),
le détachement d'une ou plusieurs section(s) de sangle (18) du cadre de déploiement (44), et
la fixation desdites sections de sangle (18) à une ou plusieurs de la pluralité de supports (20).
